# EUROPÄISCHE PATENTSCHRIFT

(11) **EP 1 209 548 B1**
(45) Veröffentlichungstag und Bekanntmachung des Hinweises auf die Patenterteilung: **04.06.2003**
(21) Anmeldenummer: 01114076.1
(22) Anmeldetag: 09.06.2001
(51) Int. Cl.: G05D 27/02, G05D 23/19, A61H 33/06

(54) **Steuerungseinrichtung für Saunaanlagen, Dampfbadanlagen oder andere Anlagen in Feuchträumen**
Control device for saunas, steam baths or other devices in humid spaces
Dispositif de commande pour saunas, bains de vapeur ou autres dispositifs en locaux humides

(30) Priorität: 22.11.2000 DE 20019896 U
(43) Veröffentlichungstag der Anmeldung: 29.05.2002
(73) Patentinhaber: Baden ohne Ende Badeeinrichtungs GmbH, 30171 Hannover (DE)
(72) Erfinder: Wölper, Christian, 30855 Langenhagen (DE)
(74) Vertreter: Wagner, Carsten

(56) Entgegenhaltungen:
- DE-A- 3 511 436
- GB-A- 2 222 944
- US-A- 4 309 999
- US-A- 4 446 356
- US-A- 4 672 692
- US-A- 5 086 385

## Beschreibung

Die Erfindung betrifft eine Feuchtraumanlage der im Oberbegriff des Anspruchs 1 genannten Art.

Steuerungseinrichtungen für Feuchtraumanlagen sind allgemein bekannt. Sie weisen Eingabemittel zur Eingabe von Steuerbefehlen zur Steuerung von Betriebsparametern der Feuchtraumanlage, beispielsweise der Sauna oder des Dampfbades, beispielsweise der Temperatur im Innenraum der Sauna oder des Dampfbades, sowie Steuermittel zur Steuerung der Betriebsparameter der Feuchtraumanlage entsprechend den von einem Benutzer über die Eingabeeinrichtung eingegebenen Steuerbefehlen auf.

Durch US-A-5,086,385 ist eine Feuchtraumanlage der betreffenden Art bekannt, die eine Steuerungseinrichtung und Eingabemittel zur Eingabe von Steuerbefehlen zur Steuerung von Betriebsparametern der Anlage, beispielsweise der Temperatur im Innenraum einer Sauna bzw. eines Dampfbades, aufweist, wobei die Eingabemittel wenigstens teilweise nach Art eines Touchscreens ausgebildet sind. Die bekannte Feuchtraumanlage weist Steuermittel zur Einstellung der Betriebsparameter entsprechend den von einem Benutzer über die Eingabemittel eingegebenen Steuerbefehlen auf.

Durch US-A-4,446,356 ist eine Heizeinrichtung für eine Sauna bekannt, bei der Steuerelemente in Form von Druckknöpfen im Innenraum der Sauna angeordnet sind.

Durch US-A-4,309,999 ist eine Einrichtung zur Steuerung der Temperatur in einem Raum für therapeutische Zwecke bekannt.

Der Erfindung liegt die Aufgabe zugrunde, eine Feuchtraumanlage der im Oberbegriff des Anspruchs 1 genannten Art anzugeben, deren Bedienung vereinfacht und komfortabler gestaltet ist.

Diese Aufgabe wird durch die im Anspruch 1 angegebene Lehre gelöst.

Erfindungsgemäß ist der Touchscreen der Steuerungseinrichtung innerhalb des Innenraumes der Feuchtraumanlage angeordnet.

Geeignete Touchscreens stehen in verschiedenen Größen als einfache und kostengünstige Standardbauteile zur Verfügung, so daß die erfindungsgemäße Steuerungseinrichtung einfach und damit kostengünstig in der Herstellung gestaltet ist.

Ein besonderer Vorteil der Verwendung eines Touchscreens im Zusammenhang mit der Steuerung einer Feuchtraumanlage, beispielsweise Saunaanlage oder Dampfbadanlage, besteht darin, daß ein Touchscreen gegenüber Feuchtigkeitseinflüssen weniger empfindlich ist als beispielsweise eine Tastatur oder ein Schalter. Somit kann der Touchscreen von einem Benutzer auch mit nassen Händen bedient werden, ohne daß die Gefahr einer Beschädigung des Touchscreens besteht.

Entsprechend den jeweiligen Anforderungen können die Eingabemittel vollständig nach Art eines Touchscreens ausgebildet sein, oder es können zusätzlich zu einem nach Art eines Touchscreens ausgebildeten Teil noch weitere Bedienelemente, beispielsweise Drehknöpfe, Schalter oder dergleichen vorgesehen sein.

Die erfindungsgemäße Steuerungseinrichtung ist zur Steuerung von Saunaanlagen, Dampfbadanlagen oder dergleichen Anlagen in Feuchträumen geeignet, beispielsweise zur Steuerung von Betriebsparametern von Duschen oder Badewannen in Bädern.

Falls erforderlich, kann die erfindungsgemäße Steuerungseinrichtung Zusatzeinrichtungen aufweisen, um neben der Steuerung über den Touchscreen oder ein Touchpanel eine Steuerung per Telefon oder über ein Computernetz, beispielsweise das Internet, zu ermöglichen. Hierzu kann die Steuerungseinrichtung mit einem Telefonanschluß verbunden sein, so daß eine Ansteuerung durch einen Benutzer per Telefon oder über ein Datennetz ermöglicht ist.

Eine Weiterbildung der erfindungsgemäßen Lehre sieht vor, daß die Benutzerführung menügesteuert über auf dem Touchscreen dargestellte Menüs erfolgt. Auf diese Weise ist die Bedienung weiter vereinfacht.

Eine außerordentlich vorteilhafte Weiterbildung der erfindungsgemäßen Lehre sieht vor, daß die Steuermittel wenigstens einen Mikrocontroller aufweisen, der mit dem Touchscreen verbunden ist und von einem Benutzer über den Touchscreen eingegebene Steuerbefehle in elektrische Signale zur Ansteuerung von elektrischen Einrichtungen der Sauna bzw. des Dampfbades umsetzt. Da der Mikrocontroller frei programmierbar ist, kann für unterschiedliche Ausführungsformen der erfindungsgemäßen Steuerungseinrichtung mit unterschiedlichen Touchscreens oder Touchpanels die gleiche Steuerelektronik verwendet werden, wobei lediglich eine Anpassung des Programms des Mikrocontrollers an den jeweils verwendeten Typ des Touchscreens erforderlich ist.

Eine Weiterbildung der vorgenannten Ausführungsform sieht vor, daß die Steuermittel eine Mehrzahl von durch den Mikrocontroller ansteuerbaren Relais aufweisen.

Zweckmäßigerweise sind die Relais in einem Schaltschrank aufgenommen, so daß sie vor Beschädigung geschützt sind.

Grundsätzlich ist es ausreichend, wenn über den Touchscreen Steuerbefehle eingegeben werden. Es ist jedoch vorteilhaft, daß die Steuermittel den Touchscreen derart ansteuern, daß dieser die gewählten Betriebsparameter, beispielsweise die Temperatur im Innenraum der Sauna bzw. des Dampfbades, anzeigt. Auf diese Weise hat der Benutzer eine visuelle Kontrolle über die jeweils eingestellten Betriebsparameter.

Eine andere vorteilhafte Weiterbildung der erfindungsgemäßen Lehre sieht vor, daß die Steuermittel mit wenigstens einem Sensor zur Messung von Betriebsparametern des Feuchtraumes, beispielsweise der Temperatur oder der Luftfeuchtigkeit in dem Feuchtraum, und/oder zur Messung von Körperparametern eines Benutzers, beispielsweise der Körpertemperatur oder des Pulses eines Benutzers, verbunden sind und daß die Steuermittel bei Erreichen eines vorgegebenen oder vorgebbaren Schwellenwertes, insbesondere eines Maximalwertes, des Betriebsparameters bzw. des Körperparameters eine Signaleinrichtung zur Erzeugung eines Warnsignales ansteuern. Bei dieser Ausführungsform wird der Benutzer optisch, akustisch oder auf anderem Wege gewarnt, wenn ein Betriebsparameter des Feuchtraumes oder ein Körperparameter des Benutzers einen Schwellenwert erreicht oder überschreitet, beispielsweise bevor die Temperatur in dem Feuchtraum einen gesundheitsgefährdenden Wert erreicht.

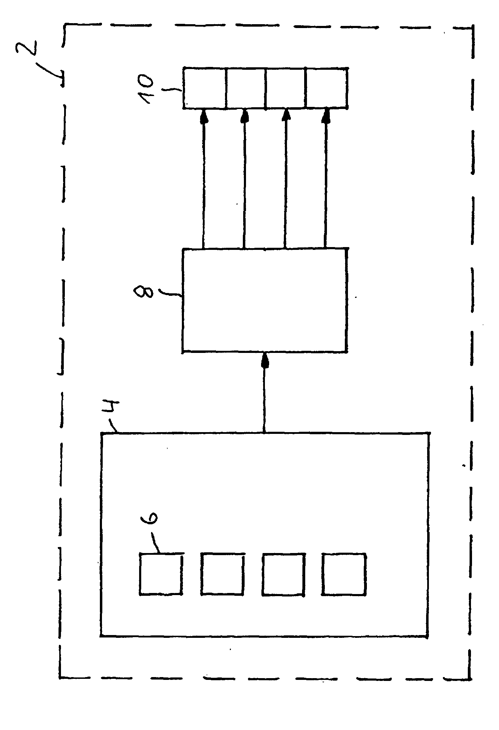

Die Erfindung wird nachfolgend anhand der beigefügten Zeichnung näher erläutert, deren einzige Figur ein stark schematisiertes Blockschaltbild einer erfindungsgemäßen Steuerungseinrichtung darstellt.

Eine erfindungsgemäße Steuerungseinrichtung 2 für eine in der Zeichnung nicht dargestellte Saunaanlage weist Eingabemittel zur Eingabe von Steuerbefehlen zur Steuerung von Betriebsparametern der Sauna, beispielsweise der Temperatur im Innenraum der Sauna auf. Die Eingabemittel sind erfindungsgemäß durch einen in der Zeichnung stark schematisiert dargestellten Touchscreen gebildet, auf dem bei Betrieb der Steuerungseinrichtung 2 beispielsweise Schaltflächen dargestellt sind, die in der Zeichnung ebenfalls nur stark schematisch gezeigt sind und von denen lediglich eine mit dem Bezugszeichen 6 versehen ist. Durch Berühren der Schaltflächen 6 kann ein Benutzer in an sich bekannter Weise Steuerbefehle eingeben, beispielsweise eine Temperatur, die im Innenraum der Sauna eingestellt werden soll, wählen. Zusätzlich werden bei Betrieb der erfindungsgemäßen Steuereinrichtung die jeweils gewählten Betriebsparameter der Sauna angezeigt. Hierzu können neben der Temperatur beispielsweise das gewählte Saunaprogramm oder die im Innenraum der Sauna herrschende Luftfeuchtigkeit angezeigt werden. Zusätzlich können beispielsweise auch Informationen über die im Innenraum der Sauna herrschende Beleuchtung oder ein in den Innenraum der Sauna übertragenes Musikprogramm angezeigt werden.

Die erfindungsgemäße Steuerungseinrichtung 2 weist ferner Steuermittel 8 auf, die zur Einstellung der Betriebsparameter entsprechend den von einem Benutzer eingegebenen Steuerbefehlen dienen. Die Steuermittel 8 sind als elektronische Schaltung ausgebildet und weisen bei diesem Ausführungsbeispiel einen nicht dargestellten Mikrocontroller auf, der mit dem Touchscreen 4 in Datenübertragungsverbindung steht. Die Steuermittel 8 dienen bei diesem Ausführungsbeispiel zur Ansteuerung einer Mehrzahl von Relais, die in einem nicht dargestellten Schaltschrank aufgenommen sind und zur Ansteuerung elektrischer Einrichtungen der Sauna dienen. In der Zeichnung ist lediglich ein Relais mit dem Bezugszeichen 10 versehen.

Die Funktionsweise der erfindungsgemäßen Steuerungseinrichtung ist wie folgt: Bei Betrieb der Steuerungseinrichtung werden auf dem Touchscreen bzw. Touchpanel 4 die jeweils angewählten Betriebsparameter, beispielsweise die Temperaturen im Innenraum der Sauna, angezeigt. Möchte ein Benutzer beispielsweise die Temperatur verändern, so gibt er über die auf dem Touchscreen 6 dargestellten Schaltflächen 6 die gewünschte Temperatur ein und bestätigt die Eingabe. Von dem Touchscreen 4 werden daraufhin entsprechende Daten zu den Steuermitteln 8 übertragen, die diese Daten in elektrische Steuersignale zur Ansteuerung der Heizung der Sauna umsetzen, so daß die von dem Benutzer gewünschte Temperatur eingestellt wird. Zum Abfühlen der jeweils herrschenden Temperatur oder anderer Betriebsparameter der Sauna können Sensoren vorgesehen sein.

Durch die Verwendung des Touchscreens bzw. Touchpanels 4 ist die Bedienung der erfindungsgemäßen Steuerungseinrichtung einfach und komfortabel gestaltet. Die Benutzerführung erfolgt hierbei menügesteuert, so daß die Bedienung noch weiter vereinfacht und komfortabler gestaltet ist.

## Patentansprüche

1. Feuchtraumanlage, insbesondere Saunaanlage, Dampfbadanlage oder dergleichen,
mit einer Steuerungseinrichtung (2),
mit Eingabemitteln zur Eingabe von Steuerbefehlen zur Steuerung von Betriebsparametern der Anlage, beispielsweise der Temperatur im Innenraum einer Sauna bzw. eines Dampfbades, wobei die Eingabemittel wenigstens teilweise nach Art eines Touchscreens (4) ausgebildet sind, und
mit Steuermitteln zur Einstellung der Betriebsparameter entsprechend den von einem Benutzer über die Eingabemittel eingegebenen Steuerbefehlen,
**dadurch gekennzeichnet,**
**daß** der Touchscreen (4) der Steuerungseinrichtung (2) innerhalb des Innenraumes der Feuchtraumanlage angeordnet ist.

2. Feuchtraumanlage nach Anspruch 1, **dadurch gekennzeichnet, daß** die Benutzerführung menügesteuert über auf dem Touchscreen (4) dargestellte Menüs erfolgt.

3. Feuchtraumanlage nach Anspruch 1, **dadurch gekennzeichnet, daß** die Steuermittel (8) wenigstens einen Mikrocontroller aufweisen, der mit dem Touchscreen (4) in Datenübertragungsverbindung steht und von einem Benutzer über den Touchscreen (4) eingegebene Steuerbefehle in elektrische Signale zur Ansteuerung elektrischer Einrichtungen der Sauna bzw. des Dampfbades, beispielsweise einer Heizung, umsetzt.

4. Feuchtraumanlage nach Anspruch 3, **dadurch gekennzeichnet, daß** die Steuermittel eine Mehrzahl von Relais (10) aufweisen, die durch den Mikrocontroller ansteuerbar sind.

5. Feuchtraumanlage nach Anspruch 4, **dadurch gekennzeichnet, daß** die Relais (10) in einem Schaltkasten aufgenommen sind.

6. Feuchtraumanlage nach Anspruch 1, **dadurch gekennzeichnet, daß** die Steuermittel (8) den Touchscreen (4) derart ansteuern, daß dieser wenigstens einen Betriebsparameter der Sauna bzw. des Dampfbades, beispielsweise die Temperatur im Innenraum der Sauna bzw. des Dampfbades, anzeigt.

7. Feuchtraumanlage nach Anspruch 1, **dadurch gekennzeichnet, daß** die Steuermittel (8) mit wenigstens einem Sensor zur Messung von Betriebsparametern des Feuchtraumes, beispielsweise der Temperatur oder der Luftfeuchtigkeit in dem Feuchtraum, und/oder zur Messung von Körperparametern eines Benutzers, beispielsweise der Körpertemperatur oder des Pulses des Benutzers, verbunden sind und daß die Steuermittel beim Erreichen eines vorgegebenen oder vorgebbaren Schwellenwertes, insbesondere eines Maximalwertes, des Betriebsparameters bzw. des Körperparameters eine Signaleinrichtung zur Erzeugung eines Warnsignales ansteuern.

## Claims

1. An installation for a humid space, in particular a sauna installation, a steam bath installation or the like,
having a control mechanism (2),
having input means for inputting control commands for controlling operating parameters of the installation, for example the temperature in the interior of a sauna or a steam bath, the input means being designed at least to some extent in the manner of a touchscreen (4),
having control means for setting the operating parameters corresponding to the control commands inputted by a user via the input means,
**characterised in that** the touchscreen (4) of the control mechanism (2) is disposed inside the interior of the humid space installation.

2. An installation for a humid space according to Claim 1,
**characterised in that** the user interface is menu-driven via menus represented on the touchscreen.

3. An installation for a humid space according to Claim 1,
**characterised in that** the control means (8) comprise at least a microcontroller, which communicates with the touchscreen (4) with respect to data transmission and converts control commands inputted by a user via the touchscreen (4) into electrical signals to control electric appliances of the sauna or steam bath, for example a heating device.

4. An installation for a humid space according to Claim 3,
**characterised in that** the control means comprise a plurality of relays (10) which can be controlled by the microcontroller.

5. An installation for a humid space according to Claim 4,
**characterised in that** the relays (10) are housed in a control box.

6. An installation for a humid space according to Claim 1,
**characterised in that** the control means (8) control the touchscreen (4) in such a manner that it displays at least one operating parameter of the sauna or steam bath, for example the temperature in the interior of the sauna or steam bath.

7. An installation for a humid space according to Claim 1,
**characterised in that** the control means (8) are connected to at least one sensor for measuring operating parameters of the humid space, for example the temperature or the air humidity in the humid space, and/or for measuring body parameters of a user, for example the body temperature of or the user's pulse,
**and in that** the control means control a signalling device for the generation of a warning signal when a predetermined or predeterminable threshold value, in particular a maximum value, of the operating parameter or body parameter, is reached.

## Revendications

1. Installation en local humide, en particulier saunas, bains de vapeur ou similaires,
avec un dispositif de commande (2),
avec des moyens d'entrée pour entrer les instructions de commande pour commander des paramètres de fonctionnement de l'installation, par exemple la température dans la chambre d'un sauna ou respectivement d'un bain de vapeur, les moyens d'entrée étant constitués au moins partiellement selon l'art antérieur d'un écran tactile (4), et
avec des moyens de commande pour régler les paramètres de fonctionnement en fonction des instructions de commande entrées par un utilisateur par l'intermédiaire des moyens d'entrée,
**caractérisée en ce que** l'écran tactile (4) du dispositif de commande (2) est disposé à l'intérieur de la chambre de l'installation en local humide.

2. Installation en local humide selon la revendication 1,
**caractérisée en ce que** le guidage de l'utilisateur commandé par menu est effectué au moyen de menus représentés sur l'écran tactile (4).

3. Installation en local humide selon la revendication 1,
**caractérisée en ce que** les moyens de commande (8) présentent au moins un microcontrôleur qui se trouve en liaison de transmission de données avec l'écran tactile (4) et transforme les instructions de commande entrées par l'utilisateur sur l'écran tactile (4) en signaux électriques pour la commande des dispositifs électriques du sauna ou du bain de vapeur, par exemple d'un chauffage.

4. Installation en local humide selon la revendication 3,
**caractérisée en ce que** les moyens de commande présentent une pluralité de relais (10) qui sont commandables par le microcontrôleur.

5. Installation en local humide selon la revendication 4,
**caractérisée en ce que** les relais (10) sont logés dans un coffret de commutation.

6. Installation en local humide selon la revendication 1,
**caractérisée en ce que** les moyens de commande (8) commandent l'écran tactile (4) de sorte que celui-ci affiche au moins un paramètre de fonctionnement du sauna ou du bain de vapeur, par exemple la température dans la chambre du sauna ou du bain de vapeur.

7. Installation en local humide selon la revendication 1,
**caractérisée en ce que** les moyens de commande (8) sont reliés avec au moins un capteur de mesure des paramètres de fonctionnement du local humide, par exemple la température ou l'humidité de l'air dans le local humide, et/ou de mesure des paramètres du corps d'un utilisateur, par exemple la température du corps ou le pouls de l'utilisateur et **en ce que** les moyens de commande, lorsqu'est atteinte une valeur de seuil prédéterminée ou prédéterminable, en particulier une valeur maximale, du paramètre de fonctionnement ou du paramètre du corps, commandent un dispositif de signalisation pour déclencher un signal d'alerte.
